# FASCICULE DE BREVET EUROPEEN

(11) **EP 0 759 597 B1**
(45) Date de publication et mention de la délivrance du brevet: **26.09.2001**
(21) Numéro de dépôt: 96201649.9
(22) Date de dépôt: 13.06.1996
(51) Int. Cl.: G06K 7/00, G06K 7/10

(54) **Dispositif de communication**
Übertragungsgerät
Communication apparatus

(30) Priorité: 15.06.1995 BE 9500531
(43) Date de publication de la demande: 26.02.1997
(73) Titulaire: ERG Transit Systems (EUR), 1930 Zaventern (BE)
(72) Inventeur: Restiau, Guy, 1330 Rixensart (BE)
(74) Mandataire: Quintelier, Claude

(56) Documents cités:
- EP-A- 0 223 961
- EP-A- 0 559 205
- EP-A- 0 632 420
- US-A- 5 099 226

## Description

L'invention concerne un dispositif de communication comprenant une première et une deuxième unité de communication agencées pour communiquer sans fil entre eux, ladite première unité comprenant un générateur de message agencé pour produire un premier message, ledit générateur étant relié à des premiers moyens de communication agencés pour émettre suivant un protocole prédéterminé des messages vers la deuxième unité, ladite deuxième unité étant pourvue de deuxième moyens de communication comprenant une première mémoire et agencée pour produire un deuxième message en réponse à la réception du premier message et transmettre le deuxième message audit premiers moyens de communication, ledit générateur de message étant également agencé pour produire un troisième message comprenant un premier mot d'adresse.

Un tel dispositif de communication est généralement connu comme par exemple du document EP-A-0 223 961 et utilisé dans différentes applications où usage est fait de télécommunication sans fil, comme par exemple des dispositifs de sécurité ou de surveillance. La première unité est en général constituée d'une centrale de gestion qui forme le noeud central du dispositif. L'émission du premier message sert en général à détecter la présence d'une deuxième unité. Cette deuxième unité est par exemple formée par une carte magnétique qu'une personne porte sur elle dans le cas d'un dispositif de sécurité ou de surveillance ou qui est monté sur un objet circulant dans une chaîne d'assemblage. La deuxième unité qui a capté le premier message va y répondre en émettant un deuxième message signalant ainsi sa présence à la première unité. Cette première unité réagit alors en produisant et en émettant un troisième message pourvu d'un premier mot d'adresse pour ainsi adresser à la deuxième unité, qui a signalé sa présence, l'information qui veut lui transmettre.

Pour permettre un fonctionnement de façon fiable d'un tel dispositif il est nécessaire d'effectuer régulièrement une opération de contrôle destinée à vérifier le bon fonctionnement de la première unité. En général des opérations de contrôle sont réalisées par une vérification interne du générateur de message et des premiers moyens de communication. Cette vérification se fait par exemple à l'aide d'un logiciel qui teste différentes fonctions.

Un désavantage des dispositifs connus est que l'opération de vérification ne vérifie pas la fiabilité de la transmission même vers une deuxième unité. Une vérification interne de la première station n'implique pas nécessairement que la transmission et la réception même aura lieu de façon fiable.

La présente invention a pour but de permettre une vérification fiable de la transmission et de la réception même des messages.

A cette fin un dispositif de communication suivant l'invention est caractérisé en ce que ladite première unité est pourvue de troisièmes moyens de communication comprenant une deuxième mémoire, et en ce que ledit générateur de message est agencé pour produire un quatrième message comprenant un deuxième mot d'adresse, lesdits troisièmes moyens de communication étant agencés pour communiquer sans fil et suivant ledit protocole avec les premiers moyens de communication et pour produire un cinquième message en réponse à la réception du quatrième message, et transmettre le cinquième message audit premiers moyens de communication, ledit générateur de message étant également agencé pour produire un message d'erreur lorsque le cinquième message n'a pas été reçu dans un délai prédéterminé qui suit l'envoi du quatrième message. La présence des troisièmes moyens de communication au sein même de la première unité permet un échange de messages entre les premiers et les troisièmes moyens de communication et donc de vérifier que la transmission même est réalisée de façon fiable. En utilisant le même protocole de communication pour communiquer entre les premiers et les deuxièmes moyens de communication et entre les premiers et troisièmes moyens de communication, ce sont la transmission et la réception même des premiers moyens qui sont vérifiées lorsque les premiers moyens détectent la réception du cinquième message. En effet lorsque les troisième moyens de communication reçoivent le quatrième message cela signifie que la transmission a eu lieu normalement et donc que les premiers moyens de communication fonctionnent normalement. Si par contre l'émission et la réception du cinquième message ne s'est pas produit dans le délai prescrit, c'est qu'il y a un problème au niveau de la transmission. Le message d'erreur est alors produit.

La communication entre les premiers et les troisièmes moyens de communication n'interfère pas avec celle entre les premiers et deuxièmes moyens de communication puisque ces derniers ne répondent pas au quatrième message. Normalement l'homme du métier n'opterait pas pour une solution de placer les troisième moyens de communication auprès de la première unité, pour éviter tout risque d'interférence.

Une première forme de réalisation préférentielle d'un dispositif suivant l'invention est caractérisé en ce que les deuxièmes et troisièmes moyens de communication sont chacun formés par une carte à mémoire sans broches de contact. La carte à mémoire sans broches de contact a l'avantage d'être portable, ce qui permet d'utiliser la deuxième unité par exemple comme carte de voyage dans un transport en commun.

Une deuxième forme de réalisation préférentielle d'un dispositif suivant l'invention est caractérisée en ce que la carte à mémoire sans broches de contact est pourvue d'un circuit d'alimentation qui ne comporte pas de batterie et qui est agencé pour absorber de l'énergie transmise par les premiers moyens de communication lors de l'émission d'un message et la transférer vers un circuit échangeur agencé pour échanger de l'information avec la mémoire. La carte à mémoire ne doit ainsi pas disposer de sa propre source d'énergie pour effectuer le transfert d'information vers ou à partir de la mémoire. La deuxième unité a de ce fait un coût de fabrication réduit.

Une troisième forme de réalisation préférentielle d'un dispositif suivant l'invention est caractérisé en ce que le générateur de messages est agencé pour produire un sixième message comprenant des données, lesdits troisième moyens de communication étant agencés pour stocker dans la deuxième mémoire les données contenues dans le sixième message. Ceci permet de sauver dans la deuxième mémoire des informations en provenance soit de la deuxième unité soit traitée dans la première unité. Ainsi par exemple lorsque le dispositif est utilisé dans des transports en commun comme moyen pour oblitérer des cartes de voyageur, de stocker des totaux dans la deuxième mémoire.

De préférence la première unité est agencée pour être désactivée sous contrôle dudit message d'erreur. Ainsi on évite que des messages erronés soit envoyés ou stockés.

Une quatrième forme de réalisation préférentielle d'un dispositif suivant l'invention est caractérisé en ce que lesdits troisième moyens de communication sont agencés pour inclure dans ledit cinquième message un mot d'identité. La distinction entre le quatrième message et les autres peut ainsi être clairement faite.

De préférence ledit générateur de message est agencé pour produire ledit quatrième message durant une phase d'initialisation suivant la mise en marche du dispositif. Ceci permet de vérifier le dispositif avant de le rendre opératif.

De préférence ledit générateur de message est agencé pour envoyer un message de façon répétitive au troisième moyens de communication. Ceci permet de surveiller le bon fonctionnement du dispositif.

L'invention concerne également un procédé de communication sans fil entre une première et une deuxième unité de communication.

L'invention sera maintenant décrite plus en détail à l'aide des dessins dans lesquels:
La figure 1 montre un exemple de réalisation d'un dispositif suivant l'invention;
La figure 2 montre un exemple de réalisation des premiers et deuxièmes moyens de communication;
La figure 3 illustre à l'aide d'un organigramme le fonctionnement d'un dispositif suivant l'invention.

Dans les dessins une même référence a été attribuée à un même élément ou à un élément analogue.

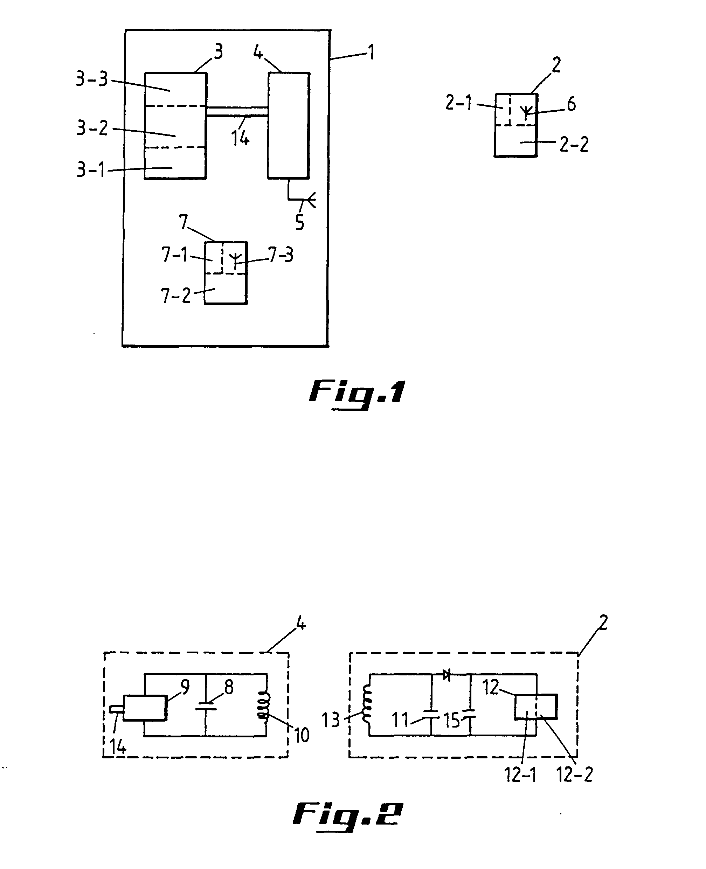

La figure 1 montre un exemple de réalisation d'un dispositif suivant l'invention. Le dispositif illustré comprend une première 1 et une deuxième 2 unité de communication. La communication entre les deux unités est réalisée sans fil, par exemple à l'aide d'onde électromagnétiques, et suivant un protocole prédéterminé. Ce protocole est par exemple constitué d'un ou de plusieurs formats d'adresses prédéterminés et d'une succession bien définie de mots d'adresses et de données. D'autres données comme par exemple une vérification d'erreur peut également faire partie de ce protocole. Suivant une solution alternative le protocole de communication opère par recherche des cartes et identification de celles-ci. Les informations des différentes cartes sont ensuite triées et chaque carte ainsi repérée est alors traitée individuellement. Suivant ce dernier protocole, il est également possible de mettre des cartes repérées en attente.

La première unité 1 comprend un générateur de message 3 qui est relié à des premiers moyens de communication 4, eux-mêmes pourvus d'une antenne 5. Le générateur de message est par exemple formé par une mémoire 3-3, un élément d'adressage 3-2 et une unité de traitement 3-1. L'unité de traitement détermine le message à produire comme il sera décrit ci-dessous et forme à cette fin avec l'aide de l'élément d'adressage une adresse pour adresser un endroit dans la mémoire où est stocké le message à produire.

Les premiers moyens de communication 4 sont agencés pour émettre suivant le protocole établi les messages produits par le générateur de message 3 vers la deuxième unité 2. A cette fin les premiers moyens de communication sont pourvus pour ajouter aux données du message l'adresse où il doit être envoyé ou celle de la carte repérée qui est traitée. Les premiers moyens de communication sont également agencés pour recevoir des messages et transmettre leur contenu à l'unité de traitement 3-1.

La deuxième unité 2 est par exemple formée par une carte à mémoire sans broches de contact est pourvue de deuxième moyens de communication 2-1. La deuxième unité 2 comprend une première mémoire 2-2 ainsi qu'une antenne 6.

De préférence la deuxième unité se présente sous la forme d'une carte de mince épaisseur ou d'un badge. La deuxième unité est ainsi facilement portable ce qui la rend apte à être utilisée par exemple en tant que carte voyageur dans des transports en commun ou en tant que badge d'identification de la personne respectivement de l'objet dans un système de surveillance de personnes respectivement d'objets.

La deuxième unité peut le cas échéant également être formée par un code bar repris sur un emballage d'un produit. Dans cet exemple de réalisation la première unité comporte un laser pour lecture du code bar.

La deuxième unité est agencée pour recevoir les messages produits par le générateur de messages et pour envoyer un message à la première unité en réponse à un message reçu de cette dernière.

La première unité 1 comprend également des troisièmes moyens de communication 7-1 qui sont de construction analogue au deuxième moyens de communication repris dans la deuxième unité. Ces troisièmes moyens de communication comportent une deuxième mémoire 7-2 ainsi qu'une antenne 7-3. Ces troisièmes moyens de communication sont disposés au sein même de la première unité, et sont agencés pour communiquer sans fil et suivant le même protocole que les deuxièmes moyens avec les premiers moyens de communication.

Les troisièmes moyens de communication se présentent de préférence sous la forme d'une carte, le cas échéant pourvu d'un code bar. La carte forme ainsi une cible bien déterminée visée par les premiers moyens pour établir une communication entre premiers et troisièmes moyens de communication.

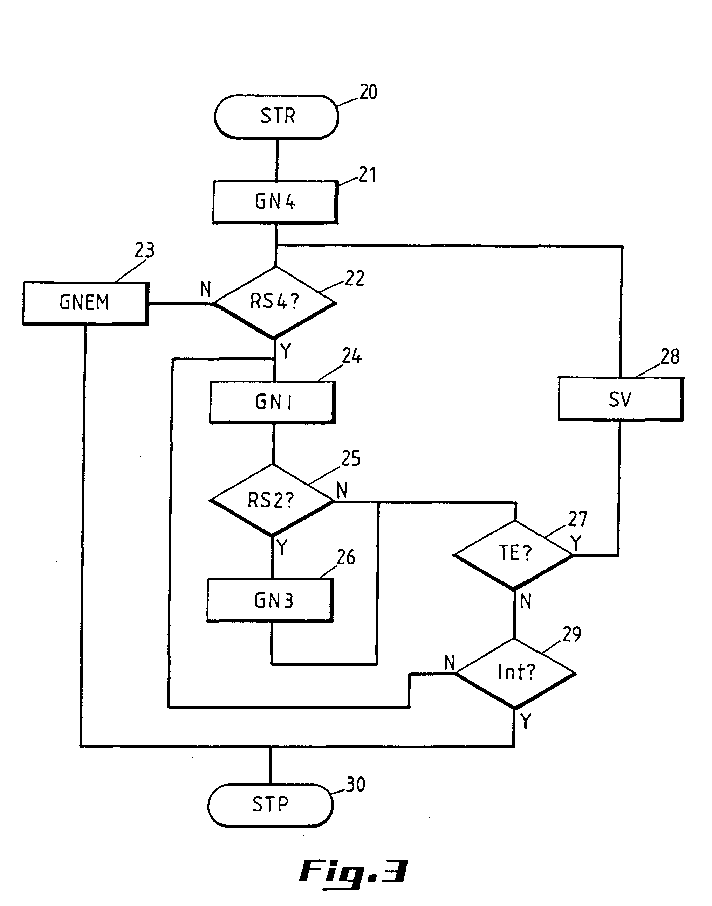

La figure 2 montre un exemple de réalisation des premiers et deuxièmes moyens de communication. Dans l'exemple illustré la communication même est réalisée par voie inductive. Il va de soi que d'autres techniques de communication comme par exemple par voie capacitive, par onde radio ou par faiseau lumineux sont également possible. Les premiers moyens de communication, dans l'exemple illustré, comportent une interface 9 reliée par la ligne 14 au générateur de message 3. En parallèle à cette interface sont branchés un condensateur 8 et une bobine 10 qui forment un premier circuit oscillant. Les deuxièmes moyens de communication comportent également un branchement en parallèle d'une bobine 13 et d'un condensateur 11 qui forment un deuxième circuit oscillant. Un élément 12 comprenant la première mémoire 2-2 et un générateur d'adresse 12-1 est branché en parallèle avec un condensateur 15 et avec le deuxième circuit oscillant.

Lorsque le générateur de message 3 produit un message, ce dernier est transmis à l'interface 9 où il est préparé pour être transmis. Le premier circuit oscillant transmet une porteuse qui comporte une charge et le message à transmettre. La porteuse est transmise et reçue par le deuxième circuit oscillant. La réception de la charge par le deuxième circuit oscillant (11,13) va provoquer le chargement du condensateur 15, qui va stocker l'énergie nécessaire à la transaction. En effet, la deuxième unité fonctionne sans batterie ou cellule solaire et doit donc recevoir son énergie de la première unité. La charge ainsi stockée dans le condensateur 15 permet d'alimenter l'élément 12 durant le temps nécessaire pour la transaction. Après que la charge ait été transférée au deuxièmes moyens de communication le message même est envoyé à la deuxième unité.

Les troisièmes moyens de communication ont une configuration analogue aux deuxièmes moyens de communication et ne seront dès lors pas décrit plus en détail en ce qui concerne leur construction.

Le fonctionnement du dispositif suivant l'invention sera maintenant décrit à l'aide de l'organigramme repris à la figure 3. L'exécution de différentes étapes est réalisée sous contrôle de l'unité de traitement faisant partie de la première unité.

20.STR: Le dispositif est mis en marche.

21. GN4: Le générateur de message produit un quatrième message destiné au troisième moyens de communication. A cette fin le quatrième message comporte par exemple l'adresse de la deuxième mémoire 7-2. Cette adresse est de préférence constituée d'un mot d'adresse de 32 bits. Le quatrième message est transmis à l'aide des premiers moyens de communication. Dans la forme de réalisation où la communication est réalisée par recherche et sélection de cartes, la carte associée aux troisièmes moyens de communication est choisie.

22. RS4? L'unité de traitement vérifie si pendant un délai prédéterminé de par exemple 0,5 s suivant l'émission du quatrième message, une réponse à ce message a été reçue? En effet lorsque le dispositif fonctionne normalement, les troisièmes moyens de communication reçoivent le quatrième message. Cette réception provoque la lecture de la deuxième mémoire à l'endroit indiqué par le mot d'adresse. A cet endroit est lu un cinquième message qui est alors envoyé au premiers moyens de communication. De préférence ce cinquième message comporte un mot d'identité qui y est inclus par les troisièmes moyens de communication.

23. GNEM. Au cas où le cinquième message n'a pas été reçu dans le délai prescrit, ou au cas où le cinquième message serait non-conforme, par exemple parce que le mot d'identité n'y est pas correctement repris ou est absent, un message d'erreur est produit. Le cas échéant ce message d'erreur entraîne la déactivation du dispositif, ou la remise à zéro et une réinitialisation du dispositif.

24. GNI. Si le cinquième message a été correctement reçu, cela signifie que la transmission même peut être réalisée de façon fiable et que le dispositif peut opérer normalement. Le générateur de message produit alors un premier message qui est envoyé. Ce premier message sert à vérifier si il y a des deuxièmes unités présentes dans le champ d'action de la première unité. Dans la forme de réalisation où la communication est réalisée par recherche et sélection de cartes, la carte associée aux troisièmes moyens de communication est mis dans une fonction d'attente jusqu'à ce qu'un nouvel appel lui est adressé.

25.RS2? L'unité de traitement vérifie si elle reçoit un ou plusieurs messages qui lui sont envoyés par une ou plusieurs deuxièmes unités. En effet lorsqu'une deuxième unité reçoit un premier message elle va y répondre en produisant un deuxième message. Ce deuxième message est par exemple produit par le fait que le premier message ait adressé un endroit dans la première mémoire où est stocké un deuxième message. Les troisièmes moyens de communication ne répondent pas à ce premier message car il ne comporte pas le mot d'adresse nécessaire pour adresser la deuxième mémoire. Ainsi ces troisième moyens ne perturbent pas le fonctionnement normal entre la première et deuxième unité.

26.GN3. Lorsque une ou plusieurs deuxième unité ont transmis un deuxième message qui a été reçu par la première unité, cette dernière va produire un troisième message comportant un deuxième mot d'adresse, par exemple 24 bits, ainsi que des données adressées à la deuxième unité adressée. Le troisième message est envoyé à la deuxième unité adressée afin d'inscrire ou de lire dans la première mémoire des données et d'exécuter ainsi la transaction requise. A nouveau les troisièmes moyens ne vont pas réagir sur ce troisième message car il ne comporte pas la bonne adresse. Dans l'exemple illustré les troisième moyens réagissent sur un mot d'adresse de 32 bits alors que les deuxièmes moyens réagissent sur un mot d'adresse de 24 bits. Une interférence entre ces deuxièmes et troisièmes moyens de communication est donc exclue.

27. TE? Afin de vérifier régulièrement le bon fonctionnement du dispositif un message comparable au quatrième message est envoyé de façon répétitive. L'unité de traitement possède à cette fin un compteur de temps qui est chaque fois remis à zéro après émission d'un message vers les troisièmes moyens. La première unité vérifie lors de la présente étape si le compteur indique un montant qui est supérieur à un montant prédéterminé.

28.SV. Au cas où le montant indiqué est supérieur au montant prédéterminé, le générateur de message va produire un sixième message comprenant des données relatives aux transactions réalisées entre la première et la deuxième unité. Le sixième message est alors envoyé au troisièmes moyens de communication. Le sixième message comporte également un premier mot d'adresse de façon comparable au quatrième message. Les données reprises dans le sixième message sont alors stockés dans la deuxième mémoire, ce qui permet d'y sauvegarder des données et de les protéger ainsi contre une défaillance des premiers moyens de communication. Puisque le sixième message est adressé au troisième moyens de communication ces derniers répondront normalement par l'envoi d'un cinquième message et le processus reprendra à partir de l'étape 24 ou de l'étape 23 si aucune réponse n'est envoyée par les troisièmes moyens de communication.

29.Int? L'unité de traitement vérifie si une commande d'interruption du dispositif n'a pas été actionnée, par exemple par une personne responsable.

30. STP. indique la fin de l'opération.

Le dispositif et procédé de communication suivant l'invention permet donc un "self-test" pour vérifier si l'émission et la réception même des messages s'effectue de façon normale.

## Revendications

1. Dispositif de communication comprenant une première (1) et une deuxième (2) unité de communication agencées pour communiquer sans fil entre eux, ladite première unité comprenant un générateur de message (3) agencé pour produire un premier message, ledit générateur étant relié à des premiers moyens de communication (4) agencés pour émettre suivant un protocole prédéterminé des messages vers la deuxième unité, ladite deuxième unité étant pourvue de deuxième moyens de communication (2-1) comprenant une première mémoire (2-2) et agencée pour produire un deuxième message en réponse à la réception du premier message et transmettre le deuxième message audit premiers moyens de communication, ledit générateur de message étant également agencé pour produire un troisième message comprenant un premier mot d'adresse, **caractérisé en ce que** ladite première unité est pourvue de troisièmes moyens de communication (7-1) comprenant une deuxième mémoire (7-2), et **en ce que** ledit générateur de message est agencé pour produire un quatrième message comprenant un deuxième mot d'adresse, lesdits troisièmes moyens de communication étant agencés pour communiquer sans fil et suivant ledit protocole avec les premiers moyens de communication et pour produire un cinquième message en réponse à la réception du quatrième message, et transmettre le cinquième message audit premiers moyens de communication, ledit générateur de message étant également agencé pour produire un message d'erreur lorsque le cinquième message n'a pas été reçu dans un délai prédéterminé qui suit l'envoi du quatrième message.

2. Dispositif suivant la revendication 1, **caractérisé en ce que** le deuxièmes et le troisièmes moyens de communication sont chacun formés par une carte à mémoire sans brochés de contact.

3. Dispositif suivant la revendication 2, **caractérisé en ce que** la carte à mémoire sans broches de contact est pourvue d'un circuit d'alimentation qui ne comporte pas de batterie et qui est agencé pour absorber de l'énergie transmise par les premiers moyens de communication lors de l'émission d'un message et la transférer vers un circuit échangeur agencé pour échanger de l'information avec la mémoire.

4. Dispositif suivant l'une des revendications 1 à 3, **caractérisé en ce que** le générateur de messages est agencé pour produire un sixième message comprenant des données, lesdits troisième moyens de communication étant agencés pour stocker dans la deuxième mémoire les données contenues dans le sixième message.

5. Dispositif suivant l'une des revendications 1 à 4, **caractérisé en ce que** la première unité est agencée pour être désactivée sous contrôle dudit message d'erreur.

6. Dispositif suivant l'une des revendications 1 à 5, **caractérisé en ce que** lesdits troisièmes moyens de communication sont agencés pour inclure dans ledit cinquième message un mot d'identité.

7. Dispositif suivant l'une des revendications 1 à 6, **caractérisé en ce que** ledit premier respectivement deuxième mot d'adresse comporte 24 respectivement 32 bits.

8. Dispositif suivant l'une des revendications 1 à 6, **caractérisé en ce que** ledit générateur de message est agencé pour produire ledit quatrième message durant une phase d'initialisation suivant la mise en marche du dispositif.

9. Dispositif suivant l'une des revendications 1 à 8, **caractérisé en ce que** ledit générateur de message est agencé pour envoyer un message de façon répétitive au troisième moyens de communication.

10. Procédé de communication sans fil entre une première et une deuxième unité de communication, ledit procédé comprenant les étapes suivantes:
- émission par la première unité d'un premier message de lecture vers la deuxième unité (GN1);
- réception par la deuxième unité dudit premier message et émission d'un deuxième message par la deuxième unité en réponse au premier message (RS2?),
- émission d'un troisième message comprenant un premier mot d'adresse par ladite première unité en réponse dudit deuxième message (GN3);
**caractérisé en ce que** le procédé comporte également les étapes:
- d'émission par la première unité d'un quatrième message vers une sous-station faisant partie de la première unité (GN4);
- réception dudit quatrième message par la sous-station et émission par cette dernière d'un cinquième message vers la première unité en réponse à ce quatrième message (RS4?);
- vérification par la première unité que le cinquième message est reçu endéans une période prédéterminée suivant l'émission du quatrième message et production d'un message d'erreur si ledit cinquième message n'est pas reçu dans ledit délai (GNEM).

## Claims

1. A communication device comprising a first (1) and a second (2) communication unit provided for wireless communication between them, said first unit (1) comprising a message generator (3) provided for producing a first message, said generator (3) being connected to first communication means (4) provided for emitting according to a predetermined protocol messages towards said second unit (2), said second unit (2) being provided with second communication (2-1) means comprising a first memory (2-2) and being provided for producing a second message in response to a reception of said first message and transmitting said second message to said first communication means (4), said message generator (3) being also provided for producing a third message comprising a first address word, **characterised in that** said first unit (1) is further provided with third communication means (7-1) comprising a second memory (7-2), and **in that** said message generator (3) is provided for producing a fourth message comprising a second address word, said third communication means (7-1) being provided for wireless communication according to said protocol with said first communication means (4) and for producing a fifth message in response to a reception of said fourth message, and transmitting said fifth message to said first communication means, said message generator (3) being also provided for producing an error message when said first message has not been received within a predetermined time limit following a transmission of said fourth message.

2. A device as claimed in claim 1 **characterised in that** said second (2-1) and said third (7-1) communication means are each provided with a contact pinless memory card.

3. A device as claimed in claim 2 **characterised in that** said contact pinless memory card is provided with a batteryless power supply circuit which is provided for absorbing energy transmitted by said first communication means (4) during transmission of a message and for transferring said energy towards an exchange circuit provided for exchanging information with said memory.

4. A device as claimed in any one of the claims 1 to 3 **characterised in that** said message generator (3) is provided for producing a sixth message comprising data, said third communication means (7-1) being provided for storing within said second memory (7-2) said data comprised within said sixth message.

5. A device as claimed in any one of the claims 1 to 4 **characterised in that** said first unit (1) is provided for being deactivated under control of said error message.

6. A device as claimed in any one of the claims 1 to 5 **characterised in that** said third communication means (7-1) are provided for including into said fifth message an identity word.

7. A device as claimed in any one of the claims 1 to 6 **characterised in that** said first respectively said second address word comprises 24 respectively 32 bits.

8. A device as claimed in any one of the claims 1 to 6 **characterised in that** said message generator (3) is provided for producing said fourth message during an initialisation phase following a start-up of said device.

9. A device as claimed in any one of the claims 1 to 8 **characterised in that** said message generator (3) is provided for sending a message in a repetitive manner towards said third communication means (7-1).

10. A method for wireless communication between a first and a second communication unit, said method comprising the following steps :
- transmission by a first unit of a first reading message towards said second unit (GN 1);
- reception by said second unit of said first message and an emission of a second message by said second unit in response to said first message (RS2?);
- emission of a third message comprising a first address word by said first unit in response to said second message (GN3);
- emission towards said first unit of a fourth message towards a substation being part of said first unit (GN4);
- reception of said fourth message by said substation and emission by the latter of a fifth message towards said first unit in response to said fourth message (RS4?);
- verification by said first unit that said fifth message is received within a predetermined period following an emission of said fourth message and production of an error message if said fifth message has not been received within said time limit (GNEM).

## Patentansprüche

1. Kommunikationseinrichtung, umfassend
eine erste (1) und eine zweite (2) Kommunikationseinheit zum drahtlosen gegenseitigen Kommunizieren,
wobei die erste Einheit (1) einen Nachrichtengenerator (3) zur Erzeugung einer ersten Nachricht umfaßt und der Nachrichtengenerator (3) mit ersten Kommunikationsmitteln (4) verbunden ist, um entsprechend einem vorbestimmten Protokoll Nachrichten zur zweiten Einheit (2) zu versenden,
wobei die zweite Einheit (2) mit zweiten Kommunikationsmitteln (2-1) mit einem ersten Speicher (2-2) versehen und dazu ausgerüstet ist, eine zweite Nachricht als Antwort auf den Empfang der ersten Nachricht zu erzeugen und die zweite Nachricht an die ersten Kommunikationsmittel (1) zu senden,
wobei der Nachrichtengenerator (3) ebenfalls dazu ausgebildet ist, um eine dritte Nachricht zu erzeugen, die einen Namen einer ersten Adresse enthält,
**dadurch gekennzeichnet, dass** die erste Einheit (1) dritte Kommunikationsmittel (7-1) mit einem dritten Speicher (7-2) umfasst und **dass** der Nachrichtengenerator (3) dazu ausgebildet ist, eine vierte Nachricht mit einem Namen einer zweiten Adresse erzeugt,
wobei die dritten Kommunikationsmittel (7-1) dazu ausgebildet sind, drahtlos und entsprechend dem Protokoll mit den ersten Kommunikationsmitteln (4) zu kommunizieren, eine fünfte Nachricht als Antwort auf die vierte Nachricht zu erzeugen und die fünfte Nachricht an die ersten Kommunikationsmittel zu senden,
wobei der Nachrichtengenerator (3) ebenfalls dazu ausgebildet ist, eine Fehlermeldung zu erzeugen, wenn die fünfte Nachricht nicht innerhalb einer vorbestimmten Zeitspanne nach Absenden der vierten Nachricht erhalten wird.

2. Kommunikationseinrichtung nach Anspruch 1, **dadurch gekennzeichnet, dass** die zweiten (2-1) und die dritten (7-1) Kommunikationsmittel jeweils durch eine Chip-Speicherkarte ohne äußere Kontakte gebildet sind.

3. Kommunikationseinrichtung nach Anspruch 2, **dadurch gekennzeichnet, dass** die Chip- Speicherkarte ohne äußere Kontakte mit einem Kreis zur Stromversorgung versehen ist, der keine Batterie umfasst und der dazu ausgebildet ist, die Energie zu absorbieren, die durch die ersten Kommunikationsmittel (4) während des Sendens einer Nachricht ausgestrahlt wird, und diese Energie in einen Tauschkreislaufeinzuspeisen, der ausgebildet ist, Informationen mit dem Speicher auszutauschen.

4. Kommunikationseinrichtung nach einem der Ansprüche 1 bis 3, **dadurch gekennzeichnet, dass** der Nachrichtengenerator (3) dazu ausgebildet ist, eine sechste, Angaben enthaltende Nachricht zu erzeugen, wobei die dritten Kommunikationsmittel (7-1) dazu ausgebildet sind, um die Angaben der sechsten Nachricht im zweiten Speicher (7-2) abzulegen.

5. Kommunikationseinrichtung nach einem der Ansprüche 1 bis 4, **dadurch gekennzeichnet, dass** die erste Einheit (1) dazu ausgebildet ist, ausgelöst durch die Fehlermeldung deaktivierbar zu sein.

6. Kommunikationseinrichtung nach einem der Ansprüche 1 bis 5, **dadurch gekennzeichnet, dass** die dritten Kommunikationsmittel (7-1) dazu ausgebildet sind, eine Benutzeridentifizierung in die fünfte Nachricht einzubeziehen.

7. Kommunikationseinrichtung nach einem der Ansprüche 1 bis 6, **dadurch gekennzeichnet, dass** der Name der ersten Adresse 24 bits und der Name der zweiten Adresse 32 bits umfasst.

8. Kommunikationseinrichtung nach einem der Ansprüche 1 bis 6, **dadurch gekennzeichnet, dass** der Nachrichtengenerator (3) dazu ausgebildet ist, die vierte Nachricht während einer Initialisierungsphase anschließend an die Inbetriebnahme der Einrichtung zu erzeugen.

9. Kommunikationseinrichtung nach einem der Ansprüche 1 bis 8, **dadurch gekennzeichnet, dass** der Nachrichtengenerator (3) dazu ausgebildet ist, eine wiederholbare Nachricht an die dritten Kommunikationsmittel (7-1) zu senden.

10. Verfahren zur drahtlosen Kommunikation zwischen einer ersten und einer zweiten Kommunikationseinheit mit den folgenden Schritten:
- Senden einer ersten Lese- Nachricht durch die erste Einheit an die zweite Einheit (GN1);
- Empfangen der ersten Nachricht durch die zweite Einheit und senden einer zweiten Nachricht durch die zweite Einheit als Antwort auf die erste Nachricht (RS23);
- Senden einer dritten Nachricht, die einen Name einer ersten Adresse enthält, durch die erste Einheit als Antwort auf die zweite Nachricht (GN3),
**gekennzeichnet, durch** die weiteren Schritte:
- Senden einer vierten Nachricht **durch** die erste Einheit an eine Unterstation, die Teil der ersten Einheit ist;
- Empfangen der vierten Nachricht **durch** die Unterstation und senden einer fünften Nachricht als Antwort auf die vierte Nachricht an die erste Einheit **durch** die Unterstation (RS4?);
- Überprüfen **durch** die erste Einheit, ob die fünfte Nachricht innerhalb einer vorbestimmten Zeitspanne folgend auf das Senden der vierten Nachricht empfangen wurde, und erzeugen einer Fehlermeldung, wenn die fünfte Nachricht nicht innerhalb der Zeitspanne empfangen wurde (GNEM).
